# EUROPÄISCHE PATENTANMELDUNG

(11) **EP 2 189 283 A1**
(43) Veröffentlichungstag der Anmeldung: **26.05.2010**
(21) Anmeldenummer: 08405284.4
(22) Anmeldetag: 21.11.2008
(51) Int. Cl.: B32B 37/10, B30B 5/02

(54) **Vorrichtung zum Laminieren eines Solarmoduls**

(71) Anmelder: Komax Holding AG, 6036 Dierikon (CH)
(72) Erfinder: Meisser, Claudio, 6330 Cham (CH); Doudin, Roger, 6012 Obernau (CH)
(74) Vertreter: EGLI-EUROPEAN PATENT ATTORNEYS

(57) **Zusammenfassung**

Die Erfindung betrifft eine Vorrichtung zum Laminieren eines Solarmoduls (2), insbesondere eine Laminierpresse (1). Die Laminierpresse weist ein Pressenoberteil (3) und ein Pressenunterteil (4) auf, die relativ zueinander beweglich gelagert sind. Die beiden Pressenteile (3,4) bilden durch ihre Formgebung einen Pressenraum, der sich bei übereinanderliegenden Pressenteilen zwischen dem Pressenoberteil und dem Pressenunterteil ausbildet. Innerhalb dieses Pressenraums ist eine Presseinrichtung (15) angeordnet, die mittels Hebemitteln (10) in einer vertikalen Richtung verfahrbar ist. Die Presseinrichtung weist ein Heizmittel (16) und eine Ausgleichsmatte auf (19), die das auf dem Pressenunterteil gelegene Solarmodul (1) erwärmt und eventuell auftretende Kantenpressungen verhindert. An der Presseinrichtung (15) sind zu beiden Seiten Dichtmittel (20,24,25,26) angeordnet, mit denen die Presseinrichtung den Pressenraum zweiteilt, nämlich in einen oberen Pressenraum und einen unteren Pressenraum. Bei geschlossener Laminierpresse (1) ist die Presseinrichtung unabhängig von Druckunterschieden in den Pressenräumen verfahrbar.

## Beschreibung

Die Erfindung betrifft eine Vorrichtung zum Laminieren eines Solarmoduls nach dem Oberbegriff des Anspruchs 1.

Flächig ausgebildete Solarmodule weisen in ihrem Inneren Solarzellen auf, die vor Umwelteinflüssen geschützt werden müssen. Dieser Schutz besteht darin, dass die Solarzellen eingekapselt werden, beispielsweise beidseitig mit je einer Folie und auf einer Vorderseite mit einer Glasplatte bedeckt werden. Nach dem Zusammenstellen dieses mehrschichtigen Aufbaus wird das Werkstück laminiert. Hierzu wird das mehrschichtige Werkstück in einer Laminierpresse laminiert, wobei das Pressen des Moduls bei Unterdruck erfolgt. Der Prozess des Laminierens ist dabei zeitlich gestaffelt und es ist möglichst genau einzuhalten, wann das Vakuum, die Wärme und Presskraft aufzubringen sind. Während des Laminiervorgangs wird die Folie auf Vorder- und Rückseite der Solarzellen aufgeschmolzen und bildet nach ihrer Erstarrung einen dichten Einschluss der Solarzellen.

Die Pressen zum Laminieren der Solarmodule bestehen zumeist aus zwei Teilen, nämlich einem Pressenoberteil und einem Pressenunterteil. Die einander korrespondierenden Pressenteile bilden einen Pressenraum, in den das Solarmodul einbringbar ist. Der Pressenraum ist evakuierbar, um das geforderte Vakuum zu erzeugen. Darüber hinaus befindet sich eine Heizvorrichtung in dem Pressenraum zur Erzeugung der geforderten Wärme.

Aus der EP 1 550 548 ist so eine Laminierpresse bekannt. Der Pressenraum dieser Laminierpresse ist durch eine Membran in einen oberen und unteren Teil aufgeteilt, so dass diese Art Presse auch als Membranpresse bezeichnet wird. Während des Laminierprozesses wird ausschliesslich der untere Teil, in dem sich das Solarmodul befindet, evakuiert. Gleichzeitig wird die Membran in Richtung des unteren Pressenraums aufgrund des Unterdrucks gezogen. Dieser Effekt wird zusätzlich dadurch verstärkt, dass in dem oberen Teil des Pressenraums ein Überdruck erzeugt wird. Die Membran dient dabei als eigentliches Pressmittel, da sie in Anlage mit dem Solarmodul gebracht wird und die Folien gleichmässig gegeneinander und gegen das Solarmodul drückt.

Die Membran ist mit dem Pressenoberteil starr verbunden, wodurch sich ein grosser unterer Pressenraum bildet. In diesem unteren Pressenraum ist das Heizelement angeordnet und das Solarmodul wird auf diesem zum Laminieren abgelegt. Durch diese Anordnung muss ein recht grosser unterer Pressenraum evakuiert werden, wobei zusätzlich nachteilig die Membran die dem Heizelement gegenüberliegende Seite des Solarmoduls erwärmen muss, so dass der Prozess zeitlich verlängert wird.

Zudem ist die Anlenkung der Membran an das entsprechende Pressenteil aufwendig. Die Membran wird umlaufend in das Pressenteil eingespannt, wobei darauf zu achten ist, dass es gleichmässig eingespannt ist, damit keine ungleichen Spannungen in der Membran auftreten. Nur wenn die Membran gleichmässig auf das Solarmodul einwirkt, kann der Laminierprozess erfolgreich sein, was bei einer nicht richtig eingespannten Membran nicht gewährleistet ist.

Es ist deshalb eine Aufgabe der Erfindung die vorgenannte Vorrichtung zum Laminieren von Solarmodulen weiterzuentwickeln und eine Laminierpresse bereitzustellen, mit der auf einfache Weise das Laminieren von Solarmodulen möglich ist.

Eine Vorrichtung zur Lösung der erfinderischen Aufgabe wird durch die Merkmale des Anspruchs 1 dargestellt. Danach zeichnet sich die Vorrichtung zum Laminieren eines Solarmoduls durch eine Presseinrichtung aus, die über wenigstens ein Anlenkmittel an wenigstens einem Pressenteil gelenkt und relativ zu demselben beweglich ist. Es ist eine Presse vorgesehen, mit einem ersten und zweiten Pressenteil, die zueinander beweglich sind, um zwischen den Pressenteilen einen Pressenraum zu bilden, der durch eine im Pressenraum angeordnete Presseneinrichtung in einen ersten und zweiten Pressenraum getrennt ist. Der jeweilige erste und zweite Pressenraum sind evakuierbar. Zusätzlich ist mindestens ein Heizelement zum Erwärmen des Solarmoduls in der Vorrichtung vorgesehen. Durch die bewegliche Anlenkung der Presseinrichtung an wenigstens einem der Pressenteile lässt sich die Presseinrichtung innerhalb des Pressenraums verfahren. Dadurch ist die Grösse des ersten und zweiten Pressenraums variabel einstellbar. Insbesondere ist dies von Vorteil, wenn einer der Pressenräume evakuiert werden soll, um ein Vakuum zu erzeugen. Vor allem kann hierdurch Zeit eingespart werden, da das Evakuieren eines geschlossenen Raumes viel Zeit in Anspruch nimmt und diese durch die geringere Grösse gegenüber dem Stand der Technik verkürzt werden kann.

In einer besonderen Ausführungsform der Erfindung weist die Presseinrichtung wenigstens ein erstes Heizelement auf, welches zwischen dem Solarmodul und dem ersten Pressenteil angeordnet ist. Dabei ist insbesondere das erste Heizelement auf einer dem Solarmodul zugewandten Seite einer Ausgleichsmatte zugeordnet. Das erste Heizelement wird dabei als eine Trenneinrichtung zwischen dem ersten und zweiten Pressenraum eingesetzt. Zusätzlich weist dieses Heizelement weiterhin oder alternativ eine Ausgleichsmatte auf. Die Presseinrichtung wird zum Laminieren in Kontakt mit dem Solarmodul gebracht, wobei gleichmässig Druck auf eine Oberfläche des Solarmoduls durch die Presseinrichtung ausgeübt wird. Durch die Ausgleichsmatte, die auf der dem Solarmodul zugewandten Seite des Heizelements angeordnet ist, können Unebenheiten in dem Heizelement ausgeglichen werden. Vor allem aber werden so Kantendrücke kompensiert, die an Randbereichen des Solarmoduls auftreten können. Zusätzlich muss die entsprechende Seite des Heizelements nicht plan ausgeführt werden, was insbesondere bei röhren- oder stangenförmigen Heizelementen von Vorteil ist. Das Heizelement, die Ausgleichsmatte oder beide Bauteile zusammen bilden eine luftundurchlässige Trenneinrichtung.

Gemäss einer besonders vorteilhaften Weiterbildung ist die Presseinrichtung bzw. das Heizelement beweglich in dem jeweiligen ersten und zweiten Pressenteil gelagert. Durch diese bewegliche Lagerung ist es möglich, die Presseinrichtung innerhalb des Pressenraums zu bewegen, wodurch der erste und zweite Pressenraum in ihren Abmessungen veränderlich sind. Vorzugsweise ist die Presseinrichtung bzw. das Heizelement in einer vertikalen Richtung in dem Pressenraum verfahrbar. Dadurch ist es gewährleistet, dass die Presseinrichtung sich parallel zu dem entsprechend angeordneten Solarmodul verfahren lässt und insbesondere auch mit diesem in Kontakt gebracht wird.

Besonders vorteilhaft ist es, wenn das jeweilige Pressenteil wenigstens ein Hebeelement, insbesondere einen Zylinder aufweist, an dem die Presseinrichtung angelenkt ist. Mit einem Zylinder lässt sich die vertikale Bewegung der Presseinrichtung auf einfache Art und Weise bewerkstelligen. Der Zylinder ist mit der Presseinrichtung auf einer dem Solarmodul gegenüberliegenden Seite der Presseinrichtung verbunden. Der Zylinder ist mit dem jeweiligen Pressenteil derart verbunden, dass durch die Anlenkung des Zylinders keine Undichtigkeiten in dem Pressenraum entstehen. Insbesondere weist der Anlenkungspunkt eine Abdichtung auf. Vorteilhafterweise weist das jeweilige Pressenteil mehrere Zylinder auf, an denen die Presseinrichtung angelenkt ist. Hierdurch können die Zylinder grösser oder kleiner gewählt werden und die gleichmässige Bewegung der Presseinrichtung wird erleichtert.

Nach einer Ausführungsform ist die Ausgleichsmatte aus einem wärmeleitfähigen und elastischem Material gefertigt. Die Ausgleichsmatte, die der dem Solarmodul zugewandten Seite des Heizelements zugeordnet ist, überträgt die durch das Heizelement ausgestrahlte Wärme auf das zu pressende Solarmodul. Um unnötige Energieerzeugung durch das Heizelement zu vermeiden, ist das Material der Ausgleichsmatte wärmeleitfähig. Dadurch wird ein hoher Betrag an abgestrahlter Wärme dem Solarmodul zugeführt. Zusätzlich ist das Material elastisch, sowohl in einer Richtung der durch die Ausgleichsmatte aufgespannten Ebene als auch in einer Richtung, die vertikal zu dieser Ebene liegt. Bei einem Solarmodul handelt es sich um ein empfindliches, insbesondere gegen Drücke empfindliches Werkstück. Deshalb ist es notwendig die Kontaktierung der Presseinrichtung mit dem Solarmodul möglichst vorsichtig zu gestalten, was zusätzlich durch eine elastische Ausgleichsmatte möglich ist.

Nach einer bevorzugten Weiterbildung weist das untere Pressenteil eine Auflageplatte für das Solarmodul auf, wobei in der Auflageplatte ein zweites Heizelement angeordnet ist. Die Auflageplatte dient zur Auflage des Solarmoduls in dem zweiten Pressenteil. Im Idealfall ist die Auflageplatte in dem zweiten Pressenteil integriert, insbesondere einstückig mit diesem verbunden. Durch die Integration des weiteren Heizelements in die Auflageplatte ist das Solarmodul beidseitig erwärmbar. Das Solarmodul weist, wie oben bereits dargestellt, auf beiden Seiten jeweils eine Folie auf, die mittels des Pressvorgangs laminiert werden. Die beidseitige Erwärmung des Solarmoduls bietet den Vorteil, die Heizelemente jeweils kleiner auszubilden, als das der Fall wäre, wenn das Solarmodul nur einseitig erwärmt würde. Weiterhin kann durch die beidseitige Erwärmung auch eine Aufwärmphase des Solarmoduls verkürzt werden, was bei der Herstellung des Solarmoduls zeitliche und finanzielle Vorteile ermöglicht.

Gemäss einer bevorzugten Ausgestaltung der Erfindung ist in einem Bereich der Auflageplatte ein Stützrahmen angeordnet, insbesondere umlaufend um ein entsprechendes Solarmodul, wobei vorzugsweise der Stützrahmen eine Höhe aufweist, die ungefähr einer Höhe eines Solarmoduls, insbesondere eines fertigen Solarmoduls, entspricht, zur Abstützung des Heizelements. Hierdurch wird verhindert, dass die Presseinrichtung seitlich bei unterhalb der Höhe des Solarmoduls verfahren wird und eine Kantenpressung auftritt, die Ursache für eine Beschädigung einerseits der Solarzellen und andererseits auch der Folien sein könnte. Durch die Auflage der Presseinrichtung auf dem Stützrahmen wird zudem sichergestellt, dass eine auf das Solarmodul applizierte Restkraft nicht zu gross ist. Der Stützrahmen dient gleichzeitig nämlich als eine Art Begrenzung des in Vertikalrichtung verfahrbaren Heizelementes.

Gemäss einer Weiterbildung der Erfindung ist der Stützrahmen nicht umlaufend ausgebildet. Vielmehr weist der Stützrahmen mehrere Stützrahmenelemente auf, die zusammen eine stützende Funktion erfüllen. Anstelle eines geschlossenen Rahmens sind somit auch einzelne plattenförmige Elemente oder Teile vorgesehen, die zudem einzeln auf dem unteren Pressenteil angeordnet sind. Die Elemente sind beabstandet zueinander auf dem Pressenteil angeordnet. Alternativ können sie auch in Dichtlage angeordnet sein.

Gemäss einem weiteren Ausführungsbeispiel und alternativ zu den vorherigen Ausführungsbeispielen, ist der Stützrahmen an den ersten Pressenteil angelenkt, wobei der Stützrahmen bei Auflage des oberen Pressenteils auf dem unteren Pressenteil in Kontakt mit der Auflageplatte ist. Durch die Anlenkung des Stützrahmens an den ersten Pressenteil weist die Auflageplatte eine Aufnahme für das Solarmodul auf. Im Übrigen ist die Auflageplatte plan ausgeführt. Der Stützrahmen ist in dem oberen Pressenteil im Bereich der Presseinrichtung angeordnet. Dadurch ist der Stützrahmen mit der Presseinrichtung vertikal innerhalb des Pressenraumes verfahrbar.

Gemäss einer bevorzugten Weiterbildung der Erfindung ist zwischen dem ersten und zweiten Pressenteil eine Dichtung angeordnet, die der Abdichtung zu einer Umgebung des Pressenraums dient. Zur Erzeugung eines Vakuums innerhalb des Pressenraums ist eine Kontaktfläche zwischen den Pressenteilen abzudichten.

Nach einer bevorzugten Ausgestaltung der Erfindung ist an einer dem zweiten Pressenteil gegenüberliegenden Seite des ersten Pressenteils ein Dichtrahmen angeordnet, wobei der Dichtrahmen insbesondere umlaufend ausgebildet ist. Der Dichtrahmen übernimmt die Funktion einer Dichtung, so dass die sich gegenüberliegenden Seitenflächen des ersten und zweiten Pressenteils nicht entsprechend ausgebildet sein müssen. Zudem ist die Anordnung eines Dichtrahmens leicht möglich und im Falle einer Reparatur der Dichtung der Rahmen leicht austauschbar. Eine aufwändige Demontage einer Dichtung, die in einem oder in beiden Pressenteilen angeordnet ist, kann somit entfallen.

Weiterhin ist vorteilhaft, dass der Dichtrahmen an wenigstens einem Bolzen angelenkt ist, der von einer Aussenseite des ersten Pressenteils den Dichtrahmen an der dem zweiten Pressenteil ge-genüberliegenden Seite hält. Die Montage des Dichtrahmens erfolgt demnach von ausserhalb der Presse, so dass eine aufwändige Montage des Dichtrahmens entfällt. Zusätzlich erleichtert dies auch die Demontage, im Falle, dass der Dichtrahmen einmal demontiert werden müsste. Darüber hinaus vereinfacht die Zweiteilung von Dichtrahmen und Pressenteil die Produktion des jeweiligen Pressenteils, indem nämlich auf eine integrierte Dichtung verzichtet werden kann. In den Dichtrahmen integriert ist eine Lüftungsbohrung, die von wenigstens einem der zwei Pressenräume nach ausserhalb geführt ist. Hierdurch kann auf eine separate Be- oder Entlüftungsbohrung in dem entsprechenden Pressenteil verzichtet werden, was produktionstechnisch vorteilhaft ist.

Bevorzugt ist zwischen dem Dichtrahmen und jeweils dem ersten und zweiten Pressenteil eine Dichtung, insbesondere eine Schnurdichtung, angeordnet. Die Schnurdichtung ist in dem Dichtrahmen längs zu einer Aussenseite der Presse angeordnet. Die Schnurdichtung ist aus einem insbesondere flexiblen Material gebildet, so dass bei geschlossener Presse, wenn beide Pressenteile aneinander liegen und die Schnurdichtung gegen die Pressenteile gedrückt wird, die Kontaktfläche der Schnurdichtung zu dem jeweiligen Pressenteil vergrössert ist. Dadurch, dass der Dichtrahmen von aussen an dem ersten Pressenteil angelenkt ist, ist der Dichtrahmen mit Spiel zu dem ersten Pressenteil angeordnet. Durch das Zusammenführen der beiden Pressenteile wird deshalb die Schnurdichtung zwischen Dichtrahmen und dem ersten Pressenteil ebenfalls zusammengedrückt, wodurch sich die Kontaktfläche und damit die Dichtung erhöht.

Gemäss einem weiteren Ausführungsbeispiel der Erfindung ist zwischen dem Dichtrahmen und der Ausgleichsmatte ein Dichtkörper angeordnet. Dieser Dichtkörper ist entsprechend dem Dichtrahmen ebenfalls umlaufend ausgebildet. Der Dichtkörper bildet zusammen mit der Presseinrichtung und dem Dichtrahmen eine Abgrenzung zwischen dem ersten und zweiten Pressenraum. Der Dichtkörper dient somit der Bildung eines ersten und zweiten Pressenraums. Insbesondere dichtet der Dichtkörper den ersten und den zweiten Pressenraum gegeneinander ab. Der Dichtkörper ist in einem Übergang zwischen dem Dichtrahmen und der Presseinrichtung angeordnet. Der Dichtkörper ist vorzugsweise teilweise flexibel ausgebildet, wodurch der Dichtkörper der Presseinrichtung gleichzeitig als eine Art Dämpfer dient. Beim Verfahren der Presseinrichtung auf das Solarmodul wird eine Aufbringgeschwindigkeit der Presseinrichtung durch den Dichtkörper gebremst. Der Dichtkörper ist nämlich derart zwischen Presseinrichtung und Dichtrahmen angeordnet, dass die Presseinrichtung beabstandet zu dem Solarmodul positioniert ist, wenn das erste und zweite Pressenteil miteinander in Kontakt stehen und der Dichtkörper in einem entspannten Zustand sich befindet. Damit die Presseinrichtung in Kontakt mit dem Solarmodul und dem Stützrahmen tritt, muss die Presseinrichtung gegen eine Widerstandskraft des flexiblen Dichtkörpers bewegt werden.

Nach einer besonders vorteilhaften Weiterentwicklung der Erfindung weist das erste Heizelement nebeneinander angeordnete Heizmittel auf, für eine über das Heizelement verteilte gleichmässige Wärmeabstrahlung. Die nebeneinander angeordneten Heizmittel sind Rohre, durch die ein Heizmedium transportierbar ist, insbesondere ein Fluid. Als Heizmedium ist besonders Öl oder eine andere geeignete Flüssigkeit geeignet.

Nach einer besonders vorteilhaften Weiterbildung wird das Solarmodul durch in den Pressenraum eingebrachte Heissluft erwärmt. Der obere Pressenraum ist während des Laminierprozesses mit Druckluft beaufschlagt, die über den Be- und Entlüftungskanal zugeführt wird und ausserhalb der Laminierpresse erwärmt wird. Hierdurch wird das Heizelement erwärmt, welches die Wärme bei Auflage auf dem Solarmodul an selbiges abgibt. Der obere Pressenraum ist alternativ auch durch Heizstrahler erwärmbar, die an dem oberen Pressenteil innerhalb des Pressenraums angeordnet sind. Nach einer besonderen Weiterentwicklung sind an dem oberen Pressenteil innerhalb des Pressenraums Induktivspulen angelenkt, die das Heizelement induktiv erwärmen.

Der erste und zweite Pressenraum sind nach einem Ausführungsbeispiel jeweils und unabhängig voneinander mit Druck beaufschlagbar oder evakuierbar. Dadurch ist es möglich, jeweils beide Pressenräume entweder zu evakuieren oder mit Druck zu beaufschlagen oder wechselseitig den einen Raum zu evakuieren und den anderen mit Druck zu beaufschlagen. Vorteilhaft wird diese Möglichkeit während des Pressprozesses angewandt, nämlich indem der zweite Pressenraum zumindest teilweise evakuiert wird und der obere Pressenraum mit einem Überdruck beaufschlagt wird. Durch den Überdruck wird die Presseinrichtung, welche nachgiebig ausgeführt ist, auf das Solarmodul gedrückt, um eine entsprechende Restkraft aufzubringen.

Weitere vorteilhafte Ausgestaltungen der Erfindung ergeben sich aus den Unteransprüchen zu entnehmen.

Nachfolgend wird anhand der Zeichnung ein bevorzugtes Ausführungsbeispiel näher erläutert. In dieser zeigt:
- Fig. 1: einen Längsschnitt durch eine Laminierpresse in geöffnetem Zustand,
- Fig. 2: einen Längsschnitt durch eine Laminierpresse in geschlossenem Zustand,
- Fig. 3: einen Längsschnitt durch eine Laminierpresse in geschlossenem Zustand, mit herabgelassener Presseinrichtung,
- Fig. 4: einen Längschnitt durch eine Laminierpresse in geschlossenem Zustand, während des Laminierprozesses,

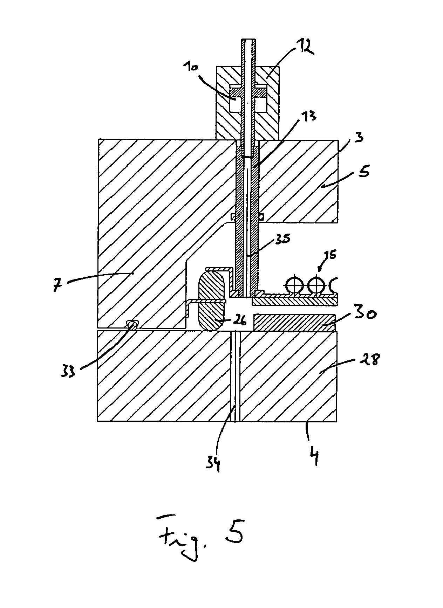

- Fig. 5: einen Ausschnitt eines Endbereiches einer geschlossenen Laminierpresse, und
- Fig. 6: eine perspektivische Draufsicht auf ein Heizelement

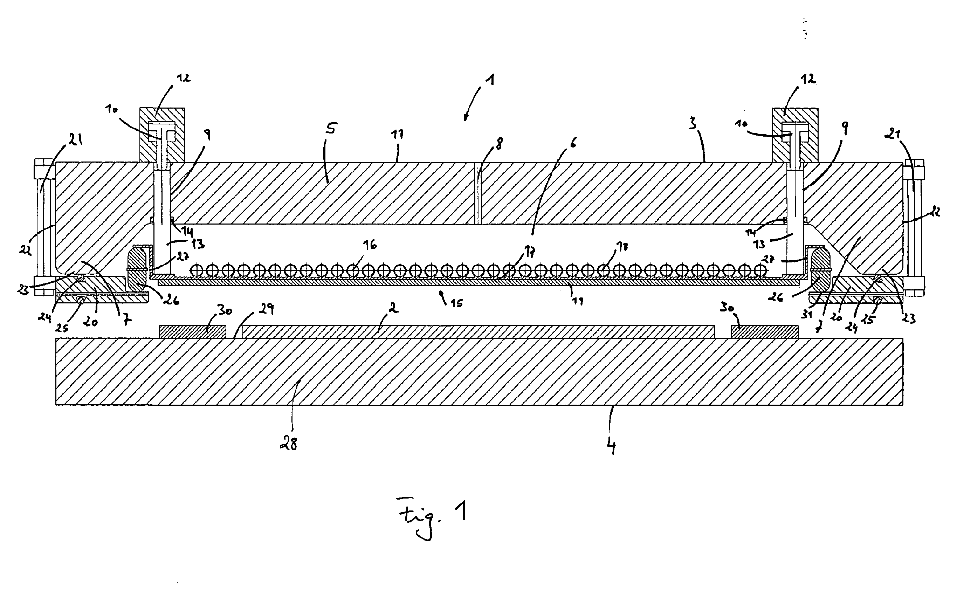

In den Figuren 1 bis 4 ist eine Laminierpresse 1 in einem Längsschnitt dargestellt. Die Laminierpresse 1 ist eine Einrichtung zum Laminieren von Solarmodulen, die in der Regel mehrschichtig aufgebaut sind. In den Figuren 1 bis 4 ist ein einzelnes Solarmodul 2 dargestellt, das zur besseren Veranschaulichung nur eine Schicht aufweist.

Die Laminierpresse 1 ist im Wesentlichen zweigeteilt, weist nämlich ein erstes Pressenteil 3 und ein zweites Pressenteil 4 auf. Die beiden Pressenteile 3 und 4 korrespondieren zueinander und sind gegeneinander beweglich. Eine Einrichtung, die beide Pressenteile 3 und 4 miteinander verbindet ist in den Figuren nicht dargestellt. Das erste und zweite Pressenteil 3 und 4 sind in vertikaler Richtung übereinander angeordnet, wobei das zweite Pressenteil 4 unterhalb des ersten Pressenteils 3 angeordnet ist. Das zweite Pressenteil 4, das zur Aufnahme des Solarmoduls 2 vorgesehen ist, wird demnach auch als unteres Pressenteil bezeichnet. Das erste Pressenteil 3 danach auch als oberes Pressenteil. Das erste Pressenteil 3 besteht aus einem Deckel 5, der im Wesentlichen parallel zu dem zweiten Pressenteil 4 angeordnet ist.

Auf einer zum zweiten Pressenteil 4 gerichteten Seite des Deckels 5 ist eine grössere Ausnehmung 6 angeordnet. Diese Ausnehmung 6 wird seitlich durch Vorsprünge 7 begrenzt und umschlossen. Die Vorsprünge 7 sind umlaufend ausgebildet, so dass die Ausnehmung 6 eine Art umgedrehte Mulde oder Wanne bildet.

Der Deckel 5 weist mehrere Durchbrechungen auf, die als vertikale Bohrungen ausgebildet sind. Eine solche Bohrung dient als Entlüftungskanal 8 und ist zentral in dem Deckel 5 angeordnet. Neben den in den Figuren dargestellten Entlüftungskanal 8 können weitere Ent- oder Belüftungskanäle in dem Deckel 5 vorgesehen sein. Weitere in dem Deckel 5 angeordnete Durchbrechungen dienen als Aufnahmeschacht 9 für jeweils ein Hebelelement. In den Figuren 1 bis 4 sind jeweils zwei Aufnahmeschächte 9 dargestellt, wobei die Laminierpresse weitere Aufnahmeschächte mit Hebelelementen aufweist.

Die Hebeelemente, die in den Aufnahmeschächten 9 angeordnet sind, sind als Zylinder 10 ausgebildet und werden pneumatisch betrieben. Auf einer Oberseite 11 des Deckels 5 sind jeweils über den Aufnahmeschächten 9 Einrichtungen 12 vorgesehen, in denen die Zylinder 10 lagern. Die Einrichtungen 12 sind derart dimensioniert, dass in den Aufnahmeschächten 9 im Wesentlichen Kolben 13 der Zylinder 10 angeordnet sind und der Zylinder in den Einrichtungen 12 lagert. Die Kolben 13 sind länger als die Aufnahmeschächte 9 ausgebildet und erstrecken sich bis in die Ausnehmung 6 des Deckels 5. In einem Endbereich der Aufnahmeschächte 9 ist eine Dichtung 14 angeordnet, die den Aufnahmeschacht 9 gegenüber der Ausnehmung 6 abdichtet. Die Dichtung 14 ist im vorliegenden Ausführungsbeispiel als Ringdichtung ausgebildet, die den Kolben 13 des Hebeelements seitlich umschliesst.

Am Ende der Kolben 13, die in die Ausnehmung 6 des Deckels 5 hineinragen, ist eine Presseinrichtung 15 angelenkt. Die Presseinrichtung 15 erstreckt sich zu einem Grossteil zwischen den Kolben 13. Die Presseinrichtung 15 weist ein Heizelement 16 auf, das aus einer durchgehend ausgebildeten Platte 17 und darübergelegenen Heizmitteln 18 gebildet ist. Die Platte 17 ist derart ausgebildet, dass sie leicht mit den Enden der Kolben 13 verbindbar ist. Alternativ dazu erfolgt die Anlenkung der Platte 17 an die Kolben 13 über Verbindungsmittel, die in den Figuren nicht dargestellt sind. Auf eine Unterseite des Heizelementes 16 ist eine Ausgleichsmatte 19 angeordnet. Die Ausgleichsmatte 19 liegt plan an der Platte 17 an und weist in Richtung des unteren Pressenteils 4.

Einer Verbindung der Ausgleichsmatte 19 mit der Platte 17 erfolgt vornehmlich mechanisch. Die Verbindung mittels eines Klebemittels ist alternativ möglich, sofern für das Klebemittel vorgesehene Klebeeigenschaften auch bei durch das Heizelement 16 erzeugter Hitze erhalten bleiben. Die Ausgleichsmatte 19 ist aus einem flexiblen Material gebildet, das besonders gute Wärmeleiteigenschaften aufweist.

Im Bereich der Vorsprünge 7 ist ein Dichtrahmen 20 angeordnet. Der Dichtrahmen 20 wird durch Bolzen 21, die an einer Aussenseite 22 des Deckels 5 angelenkt sind gehaltert. Die Bolzen 21 halten den Dichtrahmen 20 im Bereich der Vorsprünge 7 derart in Stellung, dass sie beabstandet zu einem Endbereich 23 der Vorsprünge 7 gehalten werden. Der Dichtrahmen 20 ist somit zwischen dem ersten Pressenteil 3 und dem zweiten Pressenteil 4 angeordnet.

Auf einer zu den Vorsprüngen 7 gelegenen Seite des Dichtrahmens ist eine Dichtung 24 angeordnet. Die Dichtung weist eine kleine Ausnehmung auf, in der eine Schnurdichtung Aufnahme findet, die aus der Ausnehmung soweit herausragt, dass die Schnurdichtung in Kontakt mit den Vorsprüngen 7 steht. Die Schnurdichtung ist darüber hinaus aus einem flexiblen und zusammendrückbaren Material gebildet.

Der Dichtung 24 gegenüberliegend, auf einer zum zweiten Pressenteil 4 weisenden Seite des Dichtrahmens 20 ist eine weitere Dichtung 25 angeordnet, die einen in etwa gleichen Aufbau wie die Abdichtung 24 aufweist. Eine Schnurdichtung der Dichtung 25 ist ebenfalls aus einem flexiblen Material gebildet, wobei die Dichtung 25 in einem offenen Zustand der Laminierpresse 1 nicht an den zweiten Pressenteil 4 anliegt.

Der Dichtrahmen 20 weist eine Einrichtung auf, die es ermöglicht, den Dichtkörper 26 an den Dichtrahmen 20 anzuordnen. Die Anordnung des Dichtkörpers 26 an den Dichtrahmen 20 erfolgt verbindungslos, der Dichtkörper 26 liegt auf dem Dichtrahmen 20 auf, ist also nur lose mit diesem verbunden. Der Dichtkörper 26 erstreckt sich im Wesentlichen von dem Dichtrahmen 20 aus in die Ausnehmung 6 des Deckels 5. Der Dichtrahmen 20 ist dementsprechend ausgebildet, dass derselbige in einem Bereich unterhalb der Ausnehmung 6 endet. Zwischen Dichtrahmen 20 und Dichtkörper 26 ist ein Winkelelement 27 angeordnet, das mit der Presseinrichtung 15 bzw. dem Endbereich der Kolben 13 verbunden ist. Der Dichtkörper 26 ist mit einem unteren Bereich im vorliegenden Ausführungsbeispiel mit dem Dichtrahmen 20 lose verbunden und mit einem oberen Bereich über das Winkelelement 27 mit der Presseinrichtung 15, wobei der Dichtkörper 26 nur auf den angrenzenden Teilen aufliegt. Durch geeignete Auslegung des Hubes der Pneumatikzylinder besteht nur wenig vertikales Spiel. Damit die Dichtfunktion ermöglicht wird, werden die Pneumatikzylinder ausgefahren.

Der Dichtkörper 26 ist mit einem unteren Bereich im vorliegenden Ausführungsbeispiel mit dem Dichtrahmen 20 lose verbunden und mit einem oberen Bereich über das Winkelelement 27 mit der Presseinrichtung 15, wobei der Dichtkörper 26 nur auf den angrenzenden Teilen aufliegt. Der Dichtkörper 26 ist ebenfalls aus einem flexiblen Material gebildet, wodurch der Dichtkörper 26 gestaucht werden kann und nach Entlastung wieder in seine ursprüngliche Form zurückkehrt. Der Dichtkörper 26 ist wie der Dichtrahmen 20 umlaufend ausgebildet. Ebenso ist das Winkelelement 27 umlaufend ausgebildet und beschreibt mit dem Dichtkörper 26 zusammen einen geschlossenen Ring.

Die Presseinrichtung 15 mit dem Heizelement 16 und der Ausgleichsmatte 19 sind luftdicht ausgebildet, so dass die Presseinrichtung 15 mit dem umlaufenden Dichtkörper 26, dem Winkelelement 27 und dem Dichtrahmen einen geschlossene und dichte Einheit bildet. Mittels der Dichtung 24 im Bereich zwischen den Vorsprüngen 7 und dem Dichtrahmen 20 ist die durch die Ausnehmung 6 gebildete Mulde in dem Deckel 5 in Richtung des zweiten unterhalb des ersten Pressenteils 3 gelegenen Pressenteils 4 luftdicht abgeschlossen. Ausschliesslich über den Entlüftungskanal 8 ist Luft zu- und abführbar.

Das zweite Pressenteil 4 weist eine Auflageplatte 28 auf, die unterhalb des Deckels 5 angeordnet ist. Auf einer zum Deckel 5 weisenden Seite 29 der Auflageplatte ist ein Stützrahmen 30 angeordnet. Der Stützrahmen 30 entspricht in etwa einer Höhe des Solarmoduls 2 und spannt eine Fläche zwischen einzelnen Rahmenabschnitten auf, die grösser als ein zu laminierendes Solarmodul 2 ist. Der Stützrahmen 30 entspricht in seinen Abmessungen in etwa der Ausdehnung der Presseinrichtung 15. Der Stützrahmen 30 dient als Auflage der Presseinrichtung 15.

Die Auflageplatte 28 weist ein weiteres Heizelement auf, das in den Figuren nicht dargestellt ist. Das weitere Heizelement ist unmittelbar unterhalb der Seite 29 im Bereich der Auflage des Solarmoduls 2 auf der Auflageplatte 28 angeordnet. Das weitere Heizelement erwärmt bei Auflage des Solarmoduls 2 auf der Auflageplatte 28 das Solarmodul von unterhalb.

Nachfolgend wird die Funktion der Laminierpresse 1 und der Prozess des Laminierens eines Solarmoduls 2 näher erläutert. Die Fig. 1 zeigt eine Laminierpresse 1 in offenem Zustand, bei der ein erstes (oberes) Pressenteil 3 beabstandet von einem zweiten (unteren) Pressenteil 4 angeordnet ist. Die beiden Pressenteile 3 und 4 korrespondieren zueinander und weisen im Wesentlichen eine gleiche Breite auf. Auf der Auflageplatte 28 des zweiten Pressenteils ist bereits ein Solarmodul 2 positioniert. Das Solarmodul 2 ist in etwa mittig angeordnet, zumindest aber innerhalb des Stützrahmens 30. Der Stützrahmen 30 ist derart dimensioniert, dass er zu beiden Seiten des Solarmoduls 2 beabstandet ist.

Die Zylinder 10 erlauben es, die Presseinrichtung 15 in vertikaler Richtung innerhalb der Laminierpresse zu verfahren. Die Presseinrichtung 15 ist in etwa parallel zu dem Solarmodul 2, welches auf der Auflageplatte 28 angeordnet ist, ausgerichtet. Durch die Bewegung der Presseinrichtung 15 in vertikaler Richtung wird die Presseinrichtung 15 gleichbleibend parallel zum Solarmodul 2 und der Auflageplatte 28 verfahren.

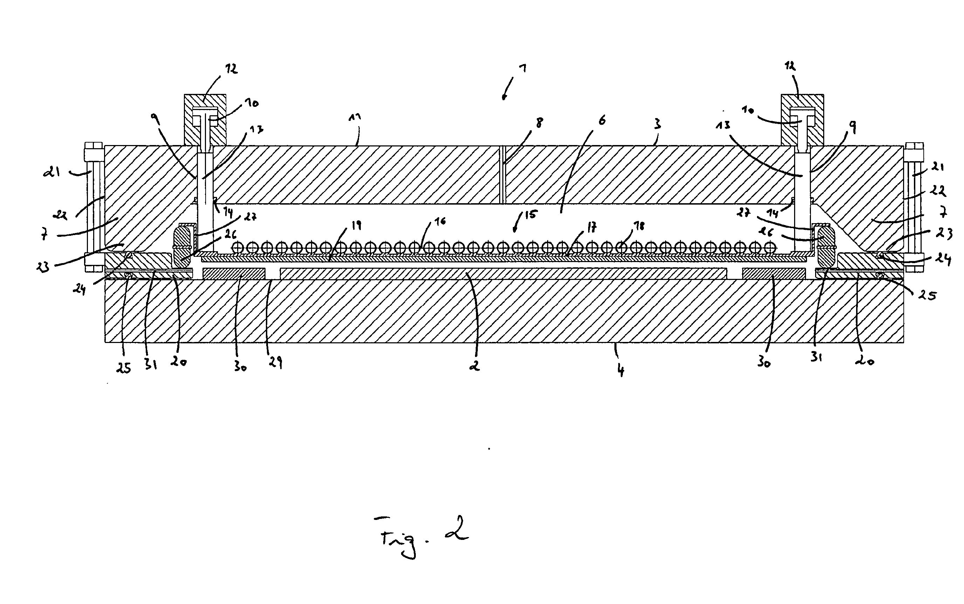

In Fig. 2 ist die Laminierpresse 1 in einem geschlossenen Zustand dargestellt. Dabei ist das erste Pressenteil 3 auf das zweite Pressenteil 4 abgesenkt. Durch die spezielle Ausformung des ersten Pressenteils 3 mit der Ausnehmung 6 und den Vorsprüngen 7 wird ein Pressenraum gebildet, in dem das Solarmodul 2 laminiert wird. Der Pressenraum ist zweigeteilt, nämlich in einen ersten Pressenraum und einen zweiten Pressenraum, wobei der erste Pressenraum im Bereich des ersten Pressenteils und der zweite Pressenraum im Bereich des zweiten Pressenteils 4 angeordnet ist. Unterteilt wird der Pressenraum in den ersten und zweiten Pressenraum im Wesentlichen durch die Presseinrichtung 15 und den seitlichen Abschluss zum Dichtrahmen 20, nämlich den Dichtkörper 26 und dem Winkelelement 27. Dichtrahmen 20, Dichtkörper 26, Winkelelement 27 und Presseinrichtung 15, die unter anderem aus dem Heizelement 16 und der Ausgleichsmatte 19 gebildet ist, bilden eine luftdichte Abgrenzung zwischen dem ersten und zweiten Pressenraum.

Der erste und zweite Pressenraum sind jeweils evakuierbar und mit Druckluft beaufschlagbar. Hierfür weist der Deckel 5 einen Entlüftungskanal 8 auf, über den dem ersten Pressenraum Luft entzogen und zugeführt werden kann. Bei abgesenktem ersten Pressenteil 3 ist der zweite Pressenraum ebenfalls luftdicht abgeschlossen und nur über wenigstens einen Entlüftungskanal 31 zugänglich. Der Lüftungskanal 31 ist in dem Dichtrahmen 20 angeordnet und verläuft in etwa waagerecht von dem zweiten Pressenraum nach ausserhalb der Laminierpresse 1. Der zweite Pressenraum wird durch Abmessungen der zum ersten Pressenraum trennenden Mittel, bestehend aus Presseinrichtung 15, Dichtkörper 26, Winkelelement 27, Dichtrahmen 20 und der Auflageplatte 25, definiert.

Durch die Zweiteilung des Pressenraums können die beiden Pressenräume jeweils und unabhängig voneinander evakuiert oder mit Druck beaufschlagt werden. So kann beispielsweise in beiden Pressenräumen ein Vakuum erzeugt werden, um das Solarmodul 2 vor dem Laminierprozess zu entgasen. Das Vakuum in dem oberen ersten Pressenraum dient als Ausgleich für das Vakuum in dem zweiten unteren Pressenraum. Das Vakuum im oberen Pressenraum verhindert, dass die Presseinrichtung 15 mit dem Heizelement 16 auf das Solarmodul 2 herabgezogen wird. In Fig. 2 ist ein solcher Prozessabschnitt dargestellt, bei dem noch kein Druck auf das Solarmodul 2 durch die Presseinrichtung 15 ausgeübt wird.

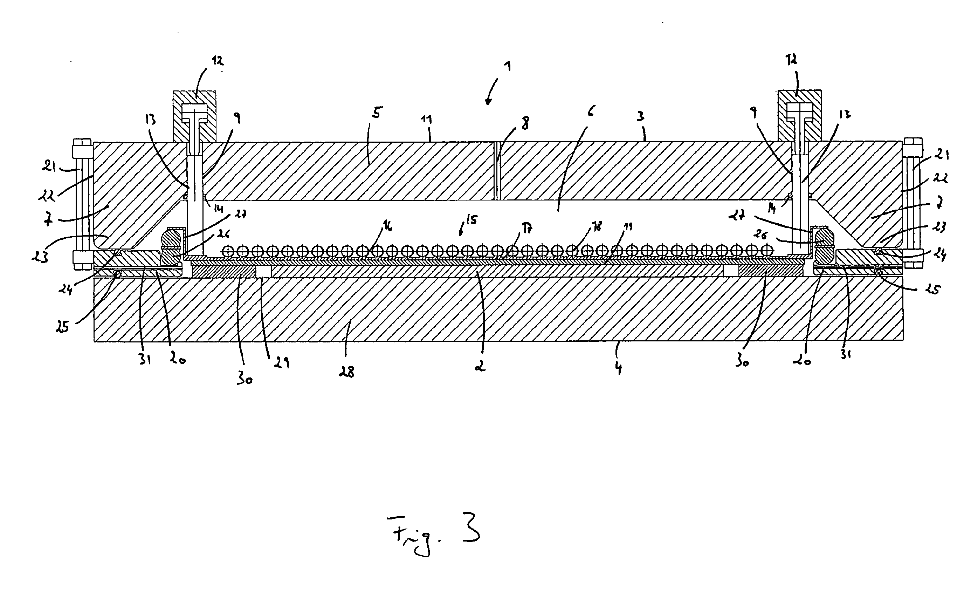

In Fig. 3 ist ein eigentlicher Laminierungsvorgang dargestellt. Die Zylinder 10 sind dabei ausgefahren und die Presseinrichtung 15 liegt auf dem Stützrahmen 30 auf. Durch die korrespondierende Höhe von Stützrahmen 30 und Solarmodul 2 steht auch die Presseinrichtung 15 mit einer zu dieser weisenden Seite des Solarmoduls 2 in Anlage. Der seitlich an der Presseinrichtung 15 angeordnete Dichtkörper 26 ist in diesem Prozessabschnitt gestaucht. Während des Laminierens liegt in dem unteren zweiten Pressenraum ein Vakuum vor, wohingegen der erste Pressenraum mit einem Überdruck beaufschlagt ist. Dieser Überdruck hilft, die Presseinrichtung 15 auf das Solarmodul 2 zu drücken. Hierdurch wird eine gleichmässige Druckkraft auf das Solarmodul 2 ausgeübt. Für eine möglichst gleichmässige Verteilung der Druckkraft auf das Solarmodul 2 weist die Presseinrichtung 15 die Ausgleichsmatte 19 auf, die zwischen dem Heizelement 16 und dem Solarmodul 2 angeordnet ist. Hierdurch können unerwünschte Kantenpressungen vermieden werden.

Der Stützrahmen 30 dient der Auflage der Presseinrichtung 15, insbesondere zur Abstützung des Heizelementes 16 während des Pressvorganges. Durch die in etwa gleiche Höhe des Stützrahmens 30 und des Solarmoduls 2 wird die Presseinrichtung 15 auf eine definierte Höhe herabgelassen, so dass keine punktuellen oder linearen Kräfte auf dem Solarmodul 2 auftreten.

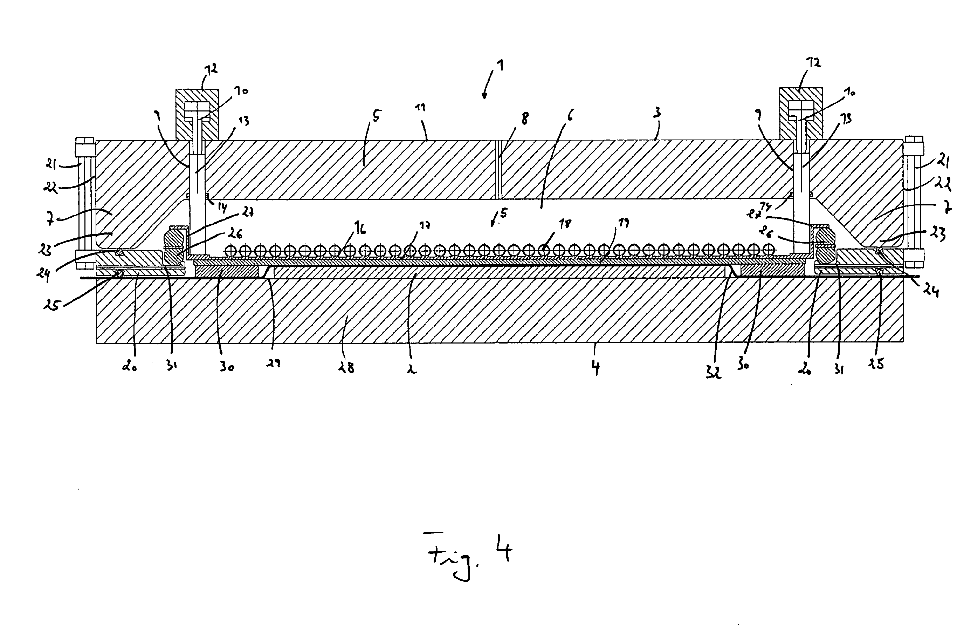

In einem weiteren Ausführungsbeispiel der Erfindung ist es auch denkbar, das Solarmodul 2 vor Verschmutzung der Ausgleichsmatte zu schützen. Hierfür wird, wie in Fig. 4 dargestellt, eine Schutzfolie 32 zwischen Presseinrichtung 15, insbesondere der Ausgleichsmatte 19, positioniert. Vorteilhaft wird die Folie zwischen Stützrahmen 30 und der Auflageplatte 28 geführt und durch den Dichtrahmen 20 in Endbereichen der Auflageplatte 28 eingeklemmt. Der Stützrahmen 28 ist nur lose auf der Auflageplatte 28 angeordnet und wird mit der Vorbereitung des Laminierungsprozesses, sobald das Solarmodul 2 auf die Auflageplatte 28 aufgebracht wird, positioniert. Somit ist es leicht möglich, während dieses Arbeitsschrittes eines Schutzfolie so anzuordnen, dass der gewünschte Schutz erzielt wird und gleichzeitig die Folie in Stellung gehalten wird.

Nach einem weiteren Ausführungsbeispiel der Erfindung ist die Laminierpresse 1 ohne einen Dichtrahmen 20 ausgeführt. In diesem Falle weist der Endbereich der Vorsprünge 7 eine einzelne Dichtung 33 auf, die wie die Dichtungen 24 und 25 in dem Dichtrahmen 20 als Schnurdichtung ausgeführt ist. Der Dichtkörper 26 ist direkt mit den Vorsprüngen 27 verbunden und bildet eine seitliche Abdichtung des oberen Pressenraumes. Die Evakuierung bzw. die Belüftung des unteren Pressenraums erfolgt in dem zweiten Ausführungsbeispiel auf zweierlei Art. Einerseits weist die Auflageplatte 28 einen Entlüftungskanal 34 auf und andererseits ist es möglich, durch den Zylinder 10, bzw. den Kolben 13, einen Be- und Entlüftung des unteren Pressenraumes zu ermöglichen, wobei dieser hierfür einen mittig angeordneten Kanal 35 aufweist.

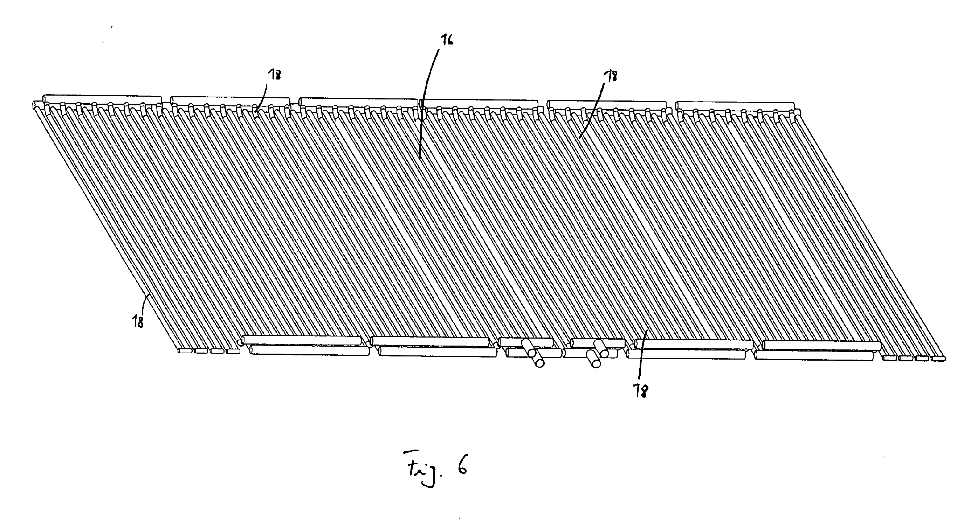

Fig. 6 zeigt das in der Erfindung eingesetzte Heizelement 16. Das Heizelement 16 besteht aus nebeneinander angeordneten Heizmitteln 18. Die Heizmittel 18 können unterschiedlich ausgebildet sein. Einerseits sind die Heizmittel 18 als mit einem Hohlraum versehene Rohre ausgeführt, durch die ein Fluid zirkuliert. Als Fluid besonders geeignet ist ein erwärmtes Öl oder eine andere geeignete Flüssigkeit. Darüber hinaus kann als Heizmedium auch Heissluft oder ein anderes erwärmtes Gas Verwendung finden. Alternativ hierzu sind die Heizmittel als elektrische Widerstandsheizmittel oder als ein induktives Heizsystem denkbar, die oberhalb der Platte 17 der Presseinrichtung 15 angeordnet sind und von dort Wärme abstrahlen. Sofern das Heizmittel 18 als Rohrkonstruktion ausgeführt ist, ist eine mögliche Anordnung der Rohre derart, dass Rohre aus einem Vorlauf immer neben Rohren aus einem Rücklauf angeordnet sind.

Die Erfindung betrifft eine Vorrichtung zum Laminieren eines Solarmoduls, insbesondere eine Laminierpresse. Die Laminierpresse weist ein Pressenoberteil und ein Pressenunterteil auf, die relativ zueinander beweglich gelagert sind. Die beiden Pressenteile bilden durch ihre Formgebung einen Pressenraum, der sich bei übereinanderliegenden Pressenteilen zwischen dem Pressenoberteil und dem Pressenunterteil ausbildet. Innerhalb dieses Pressenraums ist eine Presseinrichtung angeordnet, die mittels Hebemitteln in einer vertikalen Richtung verfahrbar ist. Die Presseinrichtung weist ein Heizmittel und eine Ausgleichsmatte auf, die das auf dem Pressenunterteil gelegene Solarmodul erwärmt und eventuell auftretende Kantenpressungen verhindert. An der Presseinrichtung sind zu beiden Seiten Dichtmittel angeordnet, mit denen die Presseinrichtung den Pressenraum zweiteilt, nämlich in einen oberen Pressenraum und einen unteren Pressenraum. Bei geschlossener Laminierpresse ist die Presseinrichtung unabhängig von Druckunterschieden in den Pressenräumen verfahrbar.

## Patentansprüche

1. Vorrichtung zum Laminieren eines Solarmoduls (2), wobei eine Presse vorgesehen ist mit einem ersten und zweiten Pressenteil (3, 4), die zueinander beweglich sind, um zwischen den Pressenteilen (3, 4) einen Pressenraum zu bilden, der durch eine im Pressenraum angeordnete Presseinrichtung (15) in einen ersten und zweiten Pressenraum getrennt ist, wobei der jeweilige erste und zweite Pressenraum evakuierbar sind, und mindestens ein Heizelement (16) zum Erwärmen des Solarmoduls (2) vorgesehen ist, **dadurch gekennzeichnet, dass** die Presseinrichtung (15) über wenigstens ein Anlenkmittel an wenigstens einem der Pressenteile (3, 4) angelenkt und relativ zu demselbigen beweglich ist.

2. Vorrichtung nach Anspruch 1, **dadurch gekennzeichnet, dass** die Presseinrichtung (15) wenigstens ein erstes Heizelement (16) aufweist, welches zwischen dem Solarmodul (2) und dem ersten Pressenteil (3) angeordnet ist, wobei insbesondere das erste Heizelement (16) auf einer dem Solarmodul (2) zugewandten Seite einer Ausgleichsmatte (19) zugeordnet ist.

3. Vorrichtung nach Anspruch 1 oder 2, **dadurch gekennzeichnet, dass** die Presseinrichtung (15) bzw. das Heizelement (16) beweglich in dem jeweiligen ersten oder zweiten Pressenteil gelagert ist, vorzugsweise in einer vertikalen Richtung in dem Pressenraum verfahrbar ist.

4. Vorrichtung nach mindestens einem der Ansprüche 1 bis 3, **dadurch gekennzeichnet, dass** das jeweilige Pressenteil (3, 4) wenigstens ein Hebeelement, insbesondere einen Zylinder (10) aufweist, an dem die Presseinrichtung (15) angelenkt ist.

5. Vorrichtung nach mindestens einem der Ansprüche 1 bis 4, **dadurch gekennzeichnet, dass** auf einer dem Solarmodul (2) zugewandten Seite des Heizelements (16) eine Ausgleichsmatte (19) angeordnet ist, die vorzugsweise aus einem wärmeleitfähigen und elastischem Material gefertigt ist.

6. Vorrichtung nach wenigstens einem der Ansprüche 1 bis 5, **dadurch gekennzeichnet, dass** das zweite Pressenteil (4) eine Auflageplatte (28) für das Solarmodul (2) aufweist und in der Auflageplatte (28) ein zweites Heizelement angeordnet ist.

7. Vorrichtung nach wenigstens einem der Ansprüche 1 bis 6, **dadurch gekennzeichnet, dass** in einem Bereich der Auflageplatte (28) ein Stützrahmen (30) angeordnet ist, insbesondere umlaufend um ein entsprechendes Solarmodul (2), wobei vorzugsweise der Stützrahmen (30) eine Höhe aufweist, die ungefähr einer Höhe eines Solarmoduls (2), insbesondere eines fertigen Solarmoduls (2), entspricht, zur Abstützung der Presseinrichtung (15).

8. Vorrichtung nach mindestens einem der Ansprüche 1 bis 7, **dadurch gekennzeichnet, dass** der Stützrahmen (30) an dem ersten Pressenteil (3) angelenkt ist, wobei der Stützrahmen bei Auflage des ersten Pressenteils (3) auf dem zweiten Pressenteil (4) in Kontakt mit der Auflageplatte (28) ist.

9. Vorrichtung nach mindestens einem der Ansprüche 1 bis 8, **dadurch gekennzeichnet, dass** zwischen dem ersten und zweiten Pressenteil (3, 4) eine Abdichtung angeordnet ist, die der Abdichtung zu einer Umgebung des Pressenraums dient.

10. Vorrichtung nach mindestens einem der Ansprüche 1 bis 9, **dadurch gekennzeichnet, dass** an einer dem zweiten Pressenteil (4) gegenüberliegenden Seite des ersten Pressenteils (3) ein Dichtrahmen (20) angeordnet ist, wobei der Dichtrahmen (20) insbesondere umlaufend ausgebildet ist.

11. Vorrichtung nach mindestens einem der Ansprüche 1 bis 10, **dadurch gekennzeichnet, dass** der Dichtrahmen (20) an wenigstens einem Bolzen (21) angelenkt ist, der von einer Aussenseite des ersten Pressenteils (3) den Dichtrahmen (20) an der dem zweiten Pressenteil (4) gegenüberliegenden Seite hält.

12. Vorrichtung nach mindestens einem der Ansprüche 1 bis 11, **dadurch gekennzeichnet, dass** zwischen dem Dichtrahmen (20) und jeweils dem ersten und zweiten Pressenteil (3, 4) eine Dichtung (24, 25), insbesondere eine Schnurdichtung, angeordnet ist.

13. Vorrichtung nach mindestens einem der Ansprüche 1 bis 12, **dadurch gekennzeichnet, dass** zwischen dem Dichtrahmen (20) und der Ausgleichsmatte (19) ein Dichtkörper (26) angeordnet ist, der vorzugsweise umlaufend ausgebildet ist, zur Bildung eines ersten und zweiten Pressenraums, wobei der Dichtkörper (26) insbesondere den ersten und zweiten Pressenraum gegeneinander abdichtet.

14. Vorrichtung nach Anspruch 1, **dadurch gekennzeichnet, dass** das erste Heizelement (16) nebeneinander angeordnete Heizmittel (18) aufweist für eine über das Heizelement (16) verteilte gleichmässige Wärmeabstrahlung.

15. Vorrichtung nach Anspruch 14, **dadurch gekennzeichnet, dass** die Heizmittel (18) Rohre sind, durch die ein Heizmedium transportierbar ist, insbesondere ein Fluid oder wenigstens die Heizmittel (18) elektrische Widerstandheizmittel sind, insbesondere induktiv wirkende Heizmittel (18).

16. Vorrichtung nach Anspruch 1, **dadurch gekennzeichnet, dass** das Heizmittel (16) durch in dem ersten Pressenraum erzeugte Wärme erwärmt wird, insbesondere durch elektrische Widerstandsheizmittel und in den ersten Pressenraum eingebrachte Heissluft, oder induktiv aufgeheizt wird, insbesondere durch wenigstens eine in dem Pressenraum angeordnete Induktionsspule.
